# EUROPEAN PATENT APPLICATION

(11) **EP 1 770 108 A1**
(43) Date of publication of application: **04.04.2007**
(21) Application number: 05765544.1
(22) Date of filing: 08.07.2005
(51) Int. Cl.: C08G 59/24, C08J 5/24, C08L 63/02, H01L 23/14

(54) **EPOXY RESIN, EPOXY RESIN COMPOSITION, AND CURED PRODUCT THEREOF**

(30) Priority: 20.07.2004 JP 2004211360; 24.09.2004 JP 2004277315
(71) Applicant: NIPPON KAYAKU KABUSHIKI KAISHA, Tokyo 102-8172 (JP)
(72) Inventor: Akatsuka, Yasumasa, Nippon Kayaku K K, Yamaguchi 7570002 (JP); Oshimi, Katsuhiko, Saitama 3380001 (JP); Nakanishi, Masataka, Saitama 3300835 (JP)
(74) Representative: Gille Hrabal Struck Neidlein Prop Roos
(86) International application number: PCT/JP2005/012649
(87) International publication number: WO 2006/008984

(57) **Abstract**

An epoxy resin represented by formula (1) below: 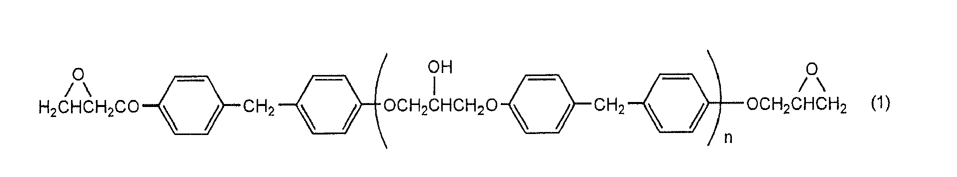 wherein the ratio of the component having two nuclei accounting for 25% or less in terms of the area corresponding to the component in a gel permeation chromatogram.

## Description

### Technical Field

The present invention relates to an epoxy resin that is in a form of crystalline having a relatively high melting point. The epoxy resin and an epoxy resin composition containing the same provide cured products with flexibility and optical anisotropy.

### Background Art

Generally, diglycidyl ethers of bisphecvnol A in a liquid state are widely known as epoxy resins, while high-molecular-weight epoxy resins synthesized by condensation of the bisphenol A epoxy resins in a liquid state with additional bisphenol A are used as solid epoxy resins. However, such high-molecular-weight epoxy resins generally have a softening point of 50 to 100°C and are liable to cause blocking during storage thereof. As epoxy resins without blocking during storage, crystalline ones are known. A bisphenol F epoxy resin in which a concentration of a specific isomer is enhanced, is known as such a crystalline epoxy resin, which is the most versatile bisphenol F epoxy resin (Japanese Patent Application Laying Open (KOKAI) No. 8-73563 (hereinafter sometimes referred to as "patent document 1")). The crystalline epoxy resin described in the specification of the patent document 1 is a bisphenol F epoxy resin containing a high concentration 4, 4' -isomer having good molecule symmetry, which is represented by the following formula (1): 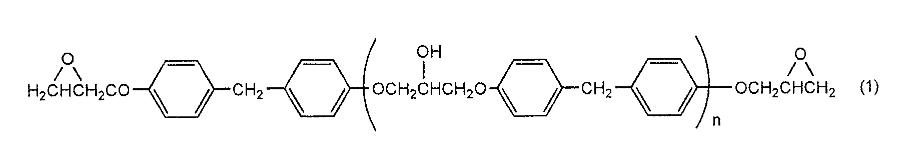 wherein n = 0. However, the above crystalline resin has a melting point substantially in the range of 50 to 70°C, which is not necessarily satisfactory for preventing blocking during storage.

Examples of crystalline epoxy resins also include diglycidyl ethers of tetramethyl biphenol (Japanese Patent No. 2566178) and triglycidyl isocyanurate (Japanese Patent No. 3465743). Though these crystalline epoxy resins have high melting points and good storage stability, the cured products thereof have high elastic modulus and lack flexibility.

On the other hand, attempts have been made in recent years to improve the characteristics of cured epoxy resins by, when curing epoxy resin compositions, externally applying physical force to the epoxy resin compositions to orientate the same in a specified direction. For example, Japanese Patent Laid-Open No. 2003-268070 discloses that cured products of epoxy resins containing a mesogenic group in their molecules show high thermal conductivity. Japanese Patent Application Laying Open (KOKAI) No. 2004-175926 discloses that cured epoxy resins having excellent thermal conductivity are obtained by applying magnetic field to epoxy resins to orientate the same, followed by curing. Further, in the field of thermoplastic resins, Japanese Patent No. 2664405 discloses that when polymers having liquid crystalline properties are processed at temperatures higher than their melting points, molded products having an excellent mechanical strength can be obtained.

### Disclosure of the Invention

With the recent trend of miniaturization and weight reduction of electrical/electronic components, there have been increasing demands, as a base material, for flexible substrates such as one using polyimide instead of conventional rigid substrates using glass fiber. In the applications of epoxy resins for the electrical/electronic components, the epoxy resins used as adhesive layers are required to have sufficient flexibility. Further, from the viewpoint of storage stability, there is a demand for epoxy resins that are crystalline and have a high melting point. Although crystalline epoxy resins are also used as a thermosetting ingredient for solder resist, the above described crystalline epoxy resins, such as triglycidyl isocyanurate, have a low epoxy equivalent, and hence being highly toxic. Thus, use of such crystalline epoxy resins tends to be avoided these days, with the increasing concern for environment protection.

Further, epoxy resins containing a mesogenic group have a disadvantage of being difficult to prepare because their molecular structure is generally complicated. Further, when applying magnetic field to the whole epoxy resin composition, they pose a problem of requiring large-scale apparatus. Still further, thermoplastic liquid crystalline polymers usually have a melting point of 250 to 350°C, and thus conditions under which they are molded are very severe compared with those of thermosetting resins.

In view of the foregoing, the inventors of the present invention accomplished the present invention through a diligent study. That is, the present invention provides:
(1) An epoxy resin represented by the following formula (1): 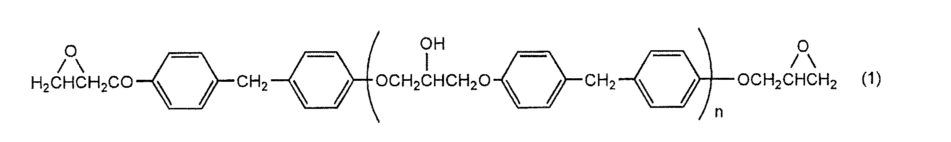 wherein n represents the number of repeating units,
   a component with n = 0 of the formula (1) accounting for 25% or less in terms of the area corresponding to the component in a gel permeation chromatogram;
(2) the epoxy resin according to (1) mentioned above wherein the component with n = 0 of the formula (1) accounting for 20% or less in terms of the area corresponding to the component in a gel permeation chromatogram;
(3) the epoxy resin according to (1) mentioned above, having a melting point of 80°C or more;
(4) the epoxy resin according to (1) mentioned above, having a melting point in a range of 80°C to 150°C;
(5) an epoxy resin composition comprising the epoxy resin according to any one of (1) to (4) mentioned above and a curing agent;
(6) an epoxy resin composition comprising the epoxy resin according to any one of (1) to (4) mentioned above and a cationic polymerization initiator;
(7) the epoxy resin composition according to (5) or (6) mentioned above having liquid crystalline properties;
(8) a varnish produced by mixing the epoxy resin compositionaccordingto (5) or (6) mentioned above and a solvent;
(9) a sheet having a planar substrate provided with a layer(s) of the epoxy resin composition according to (5) or (6) mentioned above on one or both sides of the planar substrate;
(10) the sheet according to (9) mentioned above, wherein the planar substrate is a polyimide film;
(11) the sheet according to (9) mentioned above, wherein the planar substrate is metal foil;
(12) the sheet according to (9) mentioned above, wherein the planar substrate is a release film;
(13) a prepreg produced by impregnating the varnish according to (8) mentioned above into a base material, and drying the base material by heating;
(14) a cured product produced by curing the epoxy resin composition according to (5) or (6) mentioned above.
(15) a cured product having optical anisotropy, produced by curing the epoxy resin composition according to (7) mentioned above in a liquid crystalline state; and
(16) a process for preparing the epoxy resin according to claim 1, comprising:
   reacting a compound represented by the following formula (2): 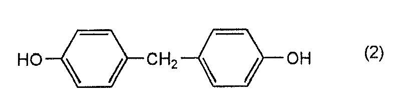 with an epihalohydrin in the presence of an alkaline metal hydroxide to obtain a compound having an epoxy equivalent of 160 to 200 g/eq; and
   reacting the obtained compound with another compound represented by the formula (2) to obtain a reaction mixture, and
   crystallizing the reaction mixture.

The epoxy resins of the present invention are crystalline epoxy resins with a high melting point, and therefore, they have excellent stability during storage. Further, the epoxy resins of the present invention are straight-chain polymers, and therefore, they are less toxic. The cured products of the epoxy resins of the present invention have sufficient flexibility. Still further, the epoxy resins of the present invention have a simple molecular structure, and therefore, they are easy to prepare.

### Brief Description of Drawing

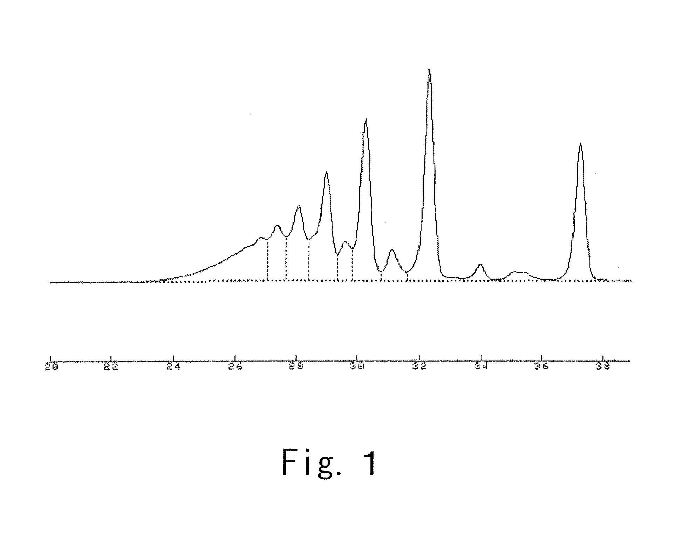

Fig. 1 is a gel permeation chromatogram.

### Best Mode for Carrying Out the Invention

The epoxy resins of the present invention uses as a raw material a phenolic compound represented by the following formula (2) : 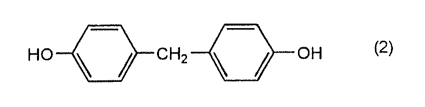 The phenolic compound is crystalline with a melting point of about 163°C. The phenolic compound is commercially available under the trade name of, e.g., p,p'-BPF produced by HONSHU CHEMICAL INDUSTRY CO., LTD. The purity of the compound represented by the formula (2) contained in p,p'-BPF is more than 99%, but the purity of the phenolic compound is not limited to that and may be in the range of 93% to 99%. The epoxy resin of the present invention can be obtained by reacting the phenolic compound with an epihalohydrin in the presence of an alkaline metal hydroxide to obtain a low molecular-weight epoxy resin, and further reacting the low-molecular-weight epoxy resin with another phenolic compound represented by the formula (2), and then precipitating a crystal from the reaction mixture.

In the preparation process of the present invention, as the epihalohydrin, epichlorohydrin or epibromohydrin can be used. The amount of the epihalohydrin to be used is usually 2 to 15 moles and preferably 3 to 12 moles per mole of the hydroxyl group of the compound represented by the formula (2).

Examples of the alkaline metal hydroxides include sodium hydroxide and potassium hydroxide, which may be used in a form of a solid or as an aqueous solution thereof. When using the aqueous solution, a process is preferably used in which adding the solution to the reaction system continuously, and at the same time distilling water and the epihalohydrin out of the reaction system under reduced pressure or atmospheric pressure, and separating them, and removing the separated water while continuously returning the epihalohydrin to the reaction system. The amount of the alkaline metal hydroxide to be used is usually 0.9 to 1.2 moles and preferably 0.95 to 1.15 moles per mole of the hydroxyl group of the phenolic compound. The reaction temperature is usually 20 to 110°C and preferably 25 to 100°C. The reaction time is usually 0.5 to 15 hours and preferably 1 to 10 hours.

An alcohol, such as methanol, ethanol, propanol or butanol, or a polar aprotic solvent, such as dimethyl sulfoxide or dimethyl sulfone, may be added to the reaction solution, which is preferable from the viewpoint of allowing the reaction to progress smoothly.

When using an alcohol, the amount thereof is usually 3 to 30% by weight and preferably 5 to 20% by weight of the amount of the epihalohydrin. When using a polar aprotic solvent, the amount thereof is usually 10 to 150% by weight and preferably 15 to 120% by weight of the amount of the epihalohydrin.

A process may also be employed in which adding, as a catalyst, a quaternary ammonium salt, such as tetramethylammonium chloride, tetramethylammonium bromide or trimethylbenzylammonium chloride, to a solution in which an epihalohydrin and the phenolic compound represented by the formula (2) are dissolved, allowing the solution to react at 30 to 110°C for 0.5 to 8 hours to obtain an etherified halohydrine, and adding an alkaline metal hydroxide in a form of a solid or as an aqueous solution thereof to the obtained etherified halohydrine, and allowing them to react at 20 to 100°C for 1 to 10 hours to undergo dehydrohalogenation (ring closure).

An excess amount of the epihalohydrin and solvent are then removed from the epoxidation reactants under heat and reduced pressure after or without washing the reactant with water thereby to obtain an epoxy resin. In order to obtain an epoxy resin containing a reduced amount of hydrolyzable halogen, a step can be added of dissolving the obtained epoxy resin in toluene or methyl isobutyl ketone and adding an aqueous solution of an alkaline metal oxide, such as sodium hydroxide or potassium hydroxide, to the epoxy resin solution to ensure the ring closure . In this case, the amount of the alkaline metal hydroxide to be used is usually 0.01 to 0.3 moles and preferably 0.05 to 0.2 moles per mole of the hydroxyl group of the phenolic compound used. The reaction temperature is usually 50 to 120°C and the reaction time is usually 0.5 to 2 hours.

After completion of the reaction, a low molecular-weight epoxy resin (A) can be obtained by removing a formed salt through filtration and washing with water, and removing the solvent under heat and reduced pressure. The epoxy equivalent of the epoxy resin (A) thus obtained is usually 160 to 200 g/eq. The patent document 1 discloses a process which includes the steps of obtaining a low molecular-weight epoxy resin in the similar steps as described above, and then obtaining a low molecular-weight crystalline epoxy resin therefrom through a crystallization using a solvent or using a seed crystal prepared in advance. Contrarily, in the present invention, the epoxy resin (A) is subj ected to an additional process to be described later, thereby to enhance the content of the polymer component represented by the formula (1) wherein n = 1 or more, without loosing its crystalline properties.

The present inventors have found that the epoxy resins having a high content of high molecular-weight molecules exhibit liquid crystalline properties over a wide range of temperature. Specifically, the epoxy resin (A), having an epoxy equivalent in the range of about 160 to 200 g/eq, also exhibits liquid crystalline properties although the temperature range over which the liquid crystalline properties are exhibited is very narrow, is usually liquid at room temperature or a crystalline with a melting point of 40°C or less. Thus, the temperature range in which the epoxy resin (A) exhibits liquid crystalline properties is very narrow. The present inventors, in contrast, have found that if an epoxy resin has a larger epoxy equivalent and a wider molecular weight distribution than the epoxy resin (A), it has crystalline properties over a wider range of temperature. Further, the present inventors have found that the epoxy resin of the present invention and the epoxy resin composition containing the same can be easily brought to the crystalline state by heating them or dissolving them in a solvent.

The molecular weight of the epoxy resin (A) can be increased by a condensation reaction of the epoxy resin (A) with the phenolic compound represented by the formula (2). The ratio of the epoxy resin (A) to the compound represented by the formula (2) introduced is such that the amount of the hydroxyl group of the compound represented by the formula (2) is usually 0.05 to 0.95 and preferably 0.1 to 0.9 moles per mole of the epoxy group of the epoxy resin (A).

To accelerate the condensation reaction, it is preferable to use a catalyst. Examples of the catalysts include triphenylphosphine, tetramethylammonium chloride, sodium hydroxide, potassium hydroxide, and quaternary phosphonium salts such as benzyltriphenylphosphonium chloride, butyltriphenylphosphonium bromide, ethyltriphenylphosphonium iodide and ethyltriphenylphosphonium bromide. The amount of the catalyst to be used is usually 0.01 to 10 parts by weight and preferably 0.05 to 5 parts by weight per mole of the epoxy group of the epoxy resin (A).

Of the above catalysts, quaternary phosphonium salts are likely to provide straight-chain epoxy resins, besides, these salts can be easily removed because of their solubility to water.

In the above condensation reaction, it is preferable to use a solvent, form the viewpoint of controlling the reaction temperatures. Examples of the solvents include cyclopentanone, cyclohexanone, methyl isobutyl ketone, methyl ethyl ketone, acetone, toluene, N-methylpyrrolidone, dimethyl sulfoxide and N,N-dimethylformamide. The amount of the solvent to be used is usually 5 to 150% by weight and preferably 10 to 100% by weight per the total weight of the epoxy resin (A) and the compound represented by the formula (2).

The reaction temperature is usually 60 to 180°C and preferably 70 to 160°C. The progress of the reaction can be traced by using, for example, gel permeation chromatography (hereinafter also referred to as GPC). The tracing is performed until the compound represented by the formula (2) is not detected at all by GPC. The reaction time is usually 0.5 to 15 hours and preferably 1 to 10 hours.

The desired epoxy resin can be crystallized by cooling the reaction solution as it is after completion of the reaction, however, preferably the reaction solution is cooled with an addition of a poor solvent for the desired epoxy resin. A process may be employed which includes the steps of reacting the epoxy resin (A) with the compound represented by the formula (2) in a poor solvent; cooling the reaction solution to precipitate crystals; adding a good solvent such as N,N-dimethylformamide or dimethyl sulfoxide to dissolve the crystals; and adding a poor solvent. The process is preferable because it widens the temperature range over which the resultant epoxy resin has liquid crystalline properties. Examples of the poor solvents include methyl isobutyl ketone, methyl ethyl ketone, acetone, toluene, methanol, ethanol and water. The amount of the poor solvent to be used is usually 50 to 400% by weight and preferably 100 to 300% by weight per the total weight of the epoxy resin (A) and the compound represented by the formula (2). The epoxy resin of the present invention can be obtained by filtering the reaction solution and drying it after precipitation of the crystals.

The epoxy resin of the present invention is represented by the above formula (1). In the formula (1), n represents the number of repeating units, which is usually 0 to 7. The value of n is preferably 3 to 5 especially in view of the stability during storage of the resin and the flexibility of the cured product of the resin and etc. The epoxy resin of the present invention, through the step of increasing its molecular weight, has the content of the compound represented by the formula (1)
wherein n = 1 of 25% or less, which is a percentage by area corresponding to the compound in a gel permeation chromatogram, which uses the method described in Example set froth below. The ratio of the compound represented by the formula (1) wherein n = 1 is preferably 20% or less and particularly preferably 5% or less including 0%, especially in view of the stability during storage of the resin and the flexibility of the cured product of the resin and etc. If the content of the compound represented by the formula (1) wherein n = 0 is 25% or less, the temperature range over which melting starts narrowed and the melting point is enhanced, resulting in the epoxy resin good in blocking resistance.

On the other hand, the temperature range over which an epoxy resin has liquid crystalline properties sometimes becomes broad, when the epoxy resin contains a certain amount, for example, about 8 to 15%, of the low molecular-weight compound represented by the formula (1) wherein n = 0 . Accordingly, it is preferable to appropriately determine the content of the compound represented by the formula (1) wherein n = 0, as well as the content of the compound having a higher molecular weight, the distribution of the molecular weights and the epoxy equivalent of the resin depending on the application for which the epoxy resin is to be used.

The epoxy resin of the present invention is a crystalline epoxy resin that is in the solid state at room temperature. The epoxy resin usually has a melting point of 70 to 150°C, and when it is prepared under preferable conditions, it has a melting point of 80 to 150°C. It usually has an epoxy equivalent of 250 to 2000 g/eq, and when it is prepared under preferable conditions, it has an epoxy equivalent of 300 to 1000 g/eq.

When the epoxy resin (B) (the epoxy resin of the present invention) is subjected to the measurements with differential scanning calorimeter (hereinafter referred to as DSC), two or more endothermic peaks are often observed, which phenomenon is an index of the epoxy resin (B)'s having liquid crystalline properties, but two peaks can sometimes be overlapped. If observation of the epoxy resin is made with a polarizing microscope while increasing temperature, the temperature range over which the epoxy resin has optical anisotropy can be identified. Generally, the temperature range over which the epoxy resin (B) has optical anisotropy is 80 to 160°C.

The epoxy resin composition of the present invention will be described below.

The epoxy resin of the present invention can be used in a curable resin composition, if it is combined with a curing agent, cationic polymerization initiator, curing accelerator, or cyanate resin, etc. Examples of preferable applications of such a resin composition include a printed wiring board, solder resist, semiconductor sealant, optical materials such as retardation film, molding materials, coating compounds and adhesives.

The epoxy resin composition of the present invention contains the epoxy resin of the present invention and a curing agent or a cationic polymerization initiator. The epoxy resin composition of the present invention can exhibit liquid crystal properties by adjusting the amount of the curing agent or a cationic polymerization initiator contained therein. In the epoxy resin composition of the present invention, either the epoxy resin of the present invention may be used alone or together with another epoxy resin. When the epoxy resin of the present invention is used together with another epoxy resin, preferably the epoxy resin of the present invention accounts for 30% by weight or more, and particularly preferably 40% by weight or more of the total epoxy resins used in the composition, especially in view of the stability of the resin composition and the flexibility of the cured product of the resin. Considering the liquid crystalline properties of the composition, preferably it accounts for 50% by weight or more and particularly preferably 60% by weight or more.

Specific examples of epoxy resins that may be used in combination with the epoxy resin of the present invention include bisphenol A epoxy resin, phenolic novolak epoxy resin, biphenol epoxy resin, triphenylmethane epoxy resin, dicyclopentadiene phenol condensation type epoxy resin, biphenyl novolak epoxy resin and alicyclic epoxy resin. Either one of these epoxy resins alone or two or more together may be used.

In the epoxy resin composition of the present invention, the epoxy resin (B) of the present invention can be used in a crystal state, while it can also be used in a resinous state. The epoxy resin (B) of the present invention can be brought to the resinous state by first subj ecting it to heating at its melting point or higher to bring it to the molten state and then to supercooling. The epoxy resin in the resinous state usually has a softening point of 45 to 100°C.

Examples of the curing agents that the epoxy resin composition of the present invention can contain include amine compounds, acid anhydride compounds, amide compounds and phenol compounds. Specific examples of the curing agents used include but are not limited to diaminodiphenylmethane, diethylenetriamine, triethylenetetramine, diaminodiphenylsulfone, isophoronediamine, dicyandiamide, polyamide resin synthesized from a dimer of linolenic acid and ethylenediamine, phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, methylhexahydrophthalic anhydride, phenolic novolak, and modified compounds thereof, imidazole, BF₃-amine complex, and guanidine derivatives. Either one of these curing agents alone or two or more together can be used.

In the epoxy resin composition of the present invention, the amount of the curing agent to be used is preferably in the range of 0. 7 to 1. 2 equivalents per equivalent of the epoxy group of the epoxy resin. If the amount is within the range, curing is fully performed, whichmay result in an epoxy resin composition having good characteristics even after curing.

When the epoxy resin composition of the present invention contains a curing agent, it may also contain a curing accelerator. Examples of the curing accelerators include imidazoles such as 2-methylimidazole, 2-ethylimidazole and 2-ethyl-4-methylimidazole; tertiary amines such as 2-(dimethylaminomethyl)phenol and 1,8-diaza-bicyclo(5,4,0)undecene-7; phosphines such as triphenylphosphine; and metallic compounds such as tin octylate. The amount of the curing accelerator to be used is selected from the range of 0.1 to 5.0 parts by weight per 100 parts of the epoxy resin, depending on the situation.

The epoxy resin composition of the present invention may contain a cationic polymerization initiator, instead of a curing agent. Examples of the cationic polymerization initiators include aromatic onium salts such as aromatic diazonium salts, aromatic iodonium salt and aromatic sulfonium salts. These cationic polymerization initiators are allowed to express their polymerization initiating activity not only by heating but also by light, and therefore suitably used for curing epoxy resin compositions at low temperatures. These cationic polymerization initiators also have the advantage of being less likely to impair the liquid crystalline properties of the epoxy resin, which is one of the characteristics of epoxy resins of the present invention, since the addition amount of the cationic polymerization initiator may be small.

The amount of the cationic polymerization initiator to be used is preferably 0.01 to 10 parts by weight per 100 parts of the epoxy resin. When the amount is not less than 0.01 parts by weight per 100 parts of the epoxy resin, curing is fully performed, which may result in an epoxy resin composition having good characteristics, even after curing. When the amount is not more than 10 parts by weight, rash progress of the curing reaction may be prevented, which results in safer reaction.

The epoxy resin composition of the present invention may contain an inorganic filler if necessary. Specific examples of the inorganic fillers to be used include silica, alumina and talc. The inorganic filler may be used in an amount of 0 to 90% by weight of the epoxy resin composition of the present invention. The epoxy resin composition of the present invention can also contain various additives such as a silane coupling agent, releasing agent including e.g., stearic acid, palmitic acid, zinc strearate or potassium stearate, and pigments.

The epoxy resin composition of the present invention is obtained by uniformly mixing the above described ingredients. A cured product of the epoxy resin composition of the present invention can be obtained in accordance with the conventionally known processes per se. For example, the cured product can be obtained in the steps of fully mixing the epoxy resin of the present invention, a curing agent and, if necessary, a curing accelerator, an inorganic filler, and additives using, depending on the purpose, an extruder, kneader or roll until the components becomes uniform thereby to obtain an epoxy resin composition containing the curing agent; melting the epoxy resin composition; molding the composition with a casting machine or a transfer molding machine; and heating the molded composition at 80 to 200°C for 2 to 10 hours. To obtain a cured product having optical anisotropy, heating is performed at a temperature in the range that allow the epoxy resin composition to have liquid crystalline properties or higher for 0. 5 to 20 hours. The temperature range over which the epoxy resin composition has liquid crystalline properties can be determined by observing the composition with a polarizing microscope while increasing the temperature.

The epoxy resin composition of the present invention that contains a cationic polymerization initiator can be cured in the steps of preparing an epoxy resin composition in accordance with the above described process using a cationic polymerization initiator, instead of a curing agent; exposing the composition to light with a wavelength of 250 to 350 nm at quantity of light of 100 to 200 mJ/cm²; and treating the composition having been exposed to light in a air circulation oven at 50 to 100°C for 10 min to 2 hours.

The varnish of the present invention can be obtained by mixing the epoxy resin composition of the present invention and a solvent. Examples of the solvent to be used include γ-butyrolactones; amide solvents such as N-methylpyrrolidone, N,N-dimethylformamide, N,N-dimethylacetamide and N,N-dimethylimidazolizinone; sulfones such as tetramethylene sulfone; ether solvents such as diethylene glycol dimethyl ether, diethylene glycol diethyl ether, propylene glycol, propylene glycol monomethyl ether, propylene glycol monomethyl ether monoacetate and propylene glycol monobutyl ether; ketone solvents such as methyl ethyl ketone, methyl isobutyl ketone, cyclopentanone and cyclohexanone; ester solvents such as ethyl acetate and methyl acetate; aromatic solvents such as toluene and xylene; and dimethyl sulfoxide. The solid concentration, which is a total concentration of the ingredients other than the solvent, of the varnish is usually 10 to 80% by weight and preferably 20 to 70% by weight.

The sheet of the present invention can be obtained in the steps of applying the varnish of the present invention on the surface of a planar substrate by any one of various known coating processes, such as gravure coating, screen printing, metal masking and spin coating, so that the coating thickness after drying becomes a specified one, for example, 5 to 100 µm; and drying the coating. Any process may be selected properly depending on the kind of the base material used, the shape or size of the substrate, or the thickness of the coating film. Examples of the base materials include films made of various polymers such as polyamide, polyamide imide, polyimide, polyarylate, polyethylene terephthalate (PET), polybutylene terephthalate, polyether ether ketone, polyether imide, polyether ketone, polyketone, polyethylene and polypropylene and/or the copolymers thereof; and metal foil such as copper foil. Of these base materials, polyimide film or metal foil are preferably used. If the sheet is further heated, a sheet cured product can be obtained. If PET film is selected from the above described base materials, a film adhesive having the PET film as a release film can be obtained.

A cured product of a prepreg can also be obtained by molding with heat pressing the prepreg, which is obtained by mixing the epoxy resin composition of the present invention with a solvent such as toluene, xylene, acetone, methyl ethyl ketone or methyl isobutyl ketone; impregnating the mixture into a base material such as glass fiber, carbon fiber, polyester fiber, polyamide fiber, alumina fiber or paper; and heating and drying the impregnated base material. The solvent used in this case usually accounts for 10 to 70% by weight and preferably 15 to 70% by weight of the prepreg, on the basis of inner percentage.

### Examples

The present invention will be described in detail by way of several examples below. The terms "parts" and "%" herein used mean "parts by weight" and "% by weight", unless otherwise specified.

### <Example A1>

Into 100 parts of a phenolic compound represented by the formula (2) (trade name: p, p' -BPF, by HONSHU CHEMICAL INDUSTRY CO., LTD.) in a flask equipped with a thermometer, a cooling pipe, a fractional distillation pipe and a stirrer, 370 parts of epichlorohydrin and 26 parts of methanol were introduced, while performing nitrogen purging, and heated to a range of 65 to 70°C to completely dissolve the phenolic compound in epichlorohydrin. Then, 40.4 parts of flake sodium hydroxide was added in parts under reflux over 100 min. After that, post-reaction was allowed to progress at 70°C for 1 h. Then, the reaction solution was rinsed with 150 parts of water twice and excess epichlorohydrin etc. was removed from the oil layer under heat in vacuo. 312 parts of methyl isobutyl ketone was added to the residue to dissolve the same, and 10 parts of 30% aqueous solution of sodium hydroxide was added and allowed to react at 70°C for 1 h. After the reaction, the reaction solution was washed with water three times to remove the formed salt etc. Then, methyl isobutyl ketone was removed under heat in vacuo to obtain 150 parts of epoxy resin (A) represented by the above described formula (1). The epoxy equivalent, the viscosity at 25°C measured with E-type viscometer manufactured by Tokyo Keiki Co. Ltd., and the total amount of chlorine of the epoxy resin (A) were 170 g/eq, 850 mP·s, and 1100 ppm, respectively. Hereinafter viscosity was measured with this type of viscometer. 25 parts of the compound represented by the above formula (2) and 55 parts of cyclopentanone were added to 85 parts of the obtained epoxy resin (A) to dissolve the same with stirring, and 0.09 parts of triphenylphosphine was added. After allowing the mixture to react under reflux for 4 h and confirming the complete disappearance of the compound represented by the formula (2) with GPC, stirring was continued to allow the reaction solution to react for 6 h in total. The reaction solution was then cooled to 80°C, 220 parts of methyl isobutyl ketone was added to precipitate crystals. The crystals were filtered and dried to obtain 85 parts of white powder-like crystalline epoxy resin (B) of the present invention. The melting point of the resultant epoxy resin (B) measured with a differential scanning calorimeter measured by DSC6200 manufactured by Seiko Instruments Inc. was 127°C. Hereinafter melting point was measured with this type of calorimeter. The amount of the component represented by the above formula (1), wherein n = 0, measured with the following GPC was 2.6% by area. The epoxy equivalent of the same was 697 g/eq.

Throughout the Examples, the conditions by which the % by area of the component represented by the above formula (1) wherein n = 0 are measured are as follows:

Columns: GPC KF-803 + GPC KF-802.5 + GPC KF-802.5 + BPC KF-802, produced by Showa Denko K.K.
Column temperature: 40°C
Eluting solvent: Tetrahydrofuran
Flow rate: 1ml/min
Detection: UV at 254 nm

### <Example A2>

A varnish of the present invention was obtained by adding, to 7.0 parts of the epoxy resin (B) obtained in example A1, 1.1 parts of phenolic novolak (softening point: 82°C, hydroxide equivalent: 106 g/eq) as a curing agent, 0.07 parts of triphenylphosphine (TPP) as a curing accelerator and 32.4 parts of N,N-dimethylformamide, and mixing them uniformly.

The above varnish of the present invention was coated on a PET film so that the thickness of the film after drying was 20 µm, heated at 150°C for 1 h to remove the solvent, and cured. After removing the PET film, a colorless, clear and flexible film-like cured product was obtained. Even after folding the cured product several times or in several layers, no crazes occurred in it. The glass transition temperature of the film measured with a DMA (dynamic mechanical analyzer) was 94°C.

Thus, it was confirmed that the epoxy resin of the present invention has excellent workability because of its crystalline properties and high melting temperature, and moreover, it has high flexibility as a film-like cured product.

### <Example B1>

25 parts of the compound represented by the above formula (2) and 55 parts of methyl isobutyl ketone were added to 85 parts of the epoxy resin (A) obtained in the same manner as in example A1 to dissolve the same with stirring, and 0.09 parts of triphenylphosphine was added. After allowing the mixture to react under reflux and confirming the complete disappearance of the compound represented by the formula (2) with a GPC, stirring was continued to allow the reaction solution to react for 5 h in total. Then the reaction solution was cooled to 80°C, 110 parts of dimethyl sulfoxide was added to dissolve the precipitated crystal, and 110 parts of methanol and 220 parts of water were added to precipitate powder-like crystals. The crystals were filtered and dried to obtain 104 parts of white powder-like crystalline epoxy resin (B). The epoxy equivalent of the epoxy resin was 452 g/eq. When measuring the melting point of the epoxy resin (B) with a DSC (differential thermal analyzer), two endothermic peaks were observed at 122. 4°C and 138.0°C. This indicates that the resultant epoxy resin (B) was liquid crystalline epoxy resin. The amount of the component represented by the above formula (1), wherein n = 0, measured with the GPC was 12.2% by area.

The gel permeation chromatogram of the epoxy resin obtained in Example B1 is set forth in Fig. 1. In Fig. 1, the abscissa represents a retention time (min) and the ordinate represents an absorbance (µV).

### <Example B2>

To 45.2 parts of the epoxy resin (B) obtained in example B1 was added 5. 0 parts of diamino diphenyl methane, as a curing agent, and mixed them uniformly in a mortar. The resultant powder-like epoxy resin composition was observed with a polarizing microscope at a temperature elevation ratio of 1°C/min. The observation confirmed that the epoxy resin composition was liquid crystalline at temperatures in the range of 125 to 140°C.

### <Example B3>

A varnish was prepared by dissolving the epoxy resin composition obtained in example B2 in 50 parts of dimethyl sulfoxide. The varnish was coated on a PET film so that the thickness of the film after drying was about 100 µm, heated at 135°C for 2 h to be cured. The obtained cured product was a clear, tough and film-like one. Even after folding the cured product, no crazes occurred in it. The observation of the film with a polarizing microscope at room temperature confirmed that the film had optical anisotopy.

## Claims

1. An epoxy resin represented by the following formula (1) : 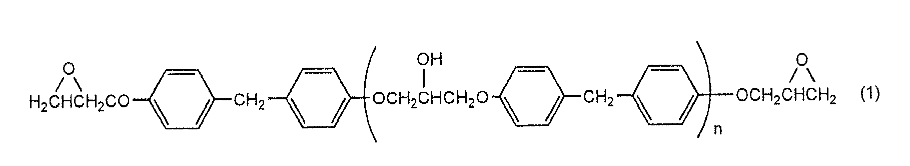 wherein n represents the number of repeating units,
a component with n = 0 of the formula (1) accounting for 25% or less in terms of the area corresponding to the component in a gel permeation chromatogram.

2. The epoxy resin according to claim 1, having a melting point in a range of 80 to 150°C.

3. An epoxy resin composition comprising the epoxy resin according to claim 1 or 2 and a curing agent.

4. An epoxy resin composition comprising the epoxy resin according to claim 1 or 2 and a cationic polymerization initiator.

5. The epoxy resin composition according to claim 3 having liquid crystalline properties.

6. The epoxy resin composition according to claim 4 having liquid crystalline properties.

7. A varnish produced by mixing the epoxy resin composition according to claim 3 or 4 and a solvent.

8. A sheet having a planar substrate provided with a layer (s) of the epoxy resin composition according to claim 3 or 4 on one or both sides of the planar substrate.

9. The sheet according to claim 8, wherein the planar substrate is a polyimide film.

10. The sheet according to claim 8, wherein the planar substrate is metal foil.

11. The sheet according to claim 8, wherein the planar substrate is a release film.

12. A prepreg produced by impregnating the varnish according to claim 7 into a base material, and drying the base material by heating.

13. A cured product produced by curing the epoxy resin composition according to claim 3 or 4.

14. A cured product having optical anisotropy, produced by curing the epoxy resin composition according to claim 5 in a liquid crystalline state.

15. A cured product having optical anisotropy, produced by curing the epoxy resin composition according to claim 6 in a liquid crystalline state.

16. A process for preparing the epoxy resin according to claim 1, comprising:
reacting a compound represented by the following formula (2): 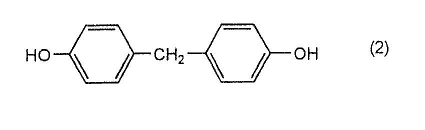 with an epihalohydrin in the presence of an alkaline metal hydroxide to obtain a compound having an epoxy equivalent of 160 to 200 g/eq; and
reacting the obtained compound with another compound represented by the formula (2) to obtain a reaction mixture, and
crystallizing the obtained reaction mixture.
